# EUROPÄISCHE PATENTSCHRIFT

(11) **EP 3 685 994 B1**
(45) Veröffentlichungstag und Bekanntmachung des Hinweises auf die Patenterteilung: **17.09.2025**
(21) Anmeldenummer: 19153519.4
(22) Anmeldetag: 24.01.2019
(51) Int. Cl.: B29C 64/259, B29C 64/129, B33Y 30/00, B33Y 40/00

(54) **STEREOLITHOGRAPHIE-VORRICHTUNG**
STEREOLITHOGRAPHY DEVICE
DISPOSITIF DE STÉRÉOLITOGRAPHIE

(43) Veröffentlichungstag der Anmeldung: 29.07.2020
(73) Patentinhaber: Ivoclar Vivadent AG, 9494 Schaan (LI)
(72) Erfinder: Zeno, John, 9497 Triesenberg (LI); Bonderer, Lorenz Josef, 7320 Sargans (CH)
(74) Vertreter: Baldus, Oliver

(56) Entgegenhaltungen:
- EP-A1- 2 877 335
- EP-A2- 1 769 902
- EP-A2- 1 950 032
- EP-B1- 2 877 335
- WO-A1-2014/020401
- US-A1- 2016 151 974
- US-A1- 2017 057 174
- US-A1- 2018 370 136
- ANONYMOUS: "Nobel 1.0 3D Printer Product Manual", 30 December 2015 (2015-12-30), XP055608224, Retrieved from the Internet <URL:https://images-na.ssl-images-amazon.com/images/I/C1X939Ebz5S.pdf> [retrieved on 20190723]

## Beschreibung

Die Erfindung betrifft eine Stereolithographie-Vorrichtung, gemäß dem Oberbegriff von Anspruch 1.

Eine Stereolithographie-Vorrichtung mit einem fest eingebauten Reservoir für die Aufnahme von Druckmaterial ist aus der US 2017/057 174 A1 und EP 2877335 A1 bekannt.

Ferner ist es seit längerem bekannt, bei Stereolithographie-Geräten oder -Vorrichtungen kassettenartige Flaschen einzusetzen, die das Druckmaterial aufnehmen. Gegenüber frei zugänglichen Behältern für das Druckmaterial haben derartige Flaschen und Kassetten den Vorteil, dass sie kontaminationssicher sind und insbesondere freie, Radikale von Monomeren nicht dazu führen können, dass eine Verunreinigung der Umgebung durch das Druckmaterial entsteht.

Typischerweise ist das Druckmaterial sehr lichtempfindlich, insbesondere bei der Lagerhalterung. Daher ist die Flasche schwarz eingefärbt, sodass der Füllstand der Flasche von außen nicht ersichtlich ist.

Das Druckmaterial ist vergleichsweise teuer. Daher ist man bemüht, die in der Flasche vorhandene Menge an Druckmaterial möglichst vollständig auszunutzen. Das Druckmaterial aus der Flasche wird daher in ein Becken oder eine Wanne geleitet, die eine gewisse Speicherkapazität für das flüssige Druckmaterial bildet. Für die Stereolithographie ist jedoch ein gewisser Füllungsgrad der Wanne unabdingbar, um das Slicen zu ermöglichen. So muss die Bauplattform in das dort vorhandene Druckmaterial eintauchbar und beim Slicen in Z-Richtung verfahrbar sein. Es ist an sich bekannt geworden, den Verbrauch von Druckmaterial während des Slicens zu berechnen. Das Drucken mittels Stereolithographie ist jedoch ein ausgesprochen komplexer Vorgang, so dass in der Praxis der Verbrauch an Druckmaterial gravierend von den theoretischen Werten abweicht.

Ein weiteres Problem besteht dahin, dass typischerweise mindestens drei verschiedene Arten von Druckmaterialien benötigt werden. Für unterschiedliche Objektanforderungen oder Indikationen, bspw. im dentalen Bereich, werden unterschiedliche Materialien angewendet, die beim Vermischen ungewollte Materialeigenschaften aufweisen würden.

Diese Materialien sind miteinander unverträglich, so dass es wichtig ist, eine Kreuzkontamination zu vermeiden. Typischerweise wird dies durch unterschiedliche farbliche Markierung der je betroffenen Flaschen und Wannen angestrebt.

Es ist jedoch mit den Stereolithographie-Vorrichtungen nicht ohne weiteres möglich, die Kreuzkontamination sicher zu vermeiden.

Demgegenüber liegt der Erfindung die Aufgabe zu Grunde, eine Stereolithographie-Vorrichtung gemäß dem Oberbegriff von Anspruch 1 zu schaffen, die hinsichtlich der organisatorischen Abläufe bei der Stereolithographie deutlich verbessert ist, ohne das hierfür ein nennenswerter Zusatzaufwand entstehen würde.

Diese Aufgabe wird erfindungsgemäß durch Anspruch 1 gelöst. Vorteilhafte Weiterbildungen ergeben sich aus den Unteransprüchen.

Erfindungsgemäß ist es vorgesehen, den Füllstand des Druckmaterials unmittelbar in der Flasche zu erfassen. Die Erfassung kann an der Flasche oder der Flasche benachbart geschehen, und der Füllzustand wird in einem besonderen Speicher abgespeichert. Dieser ist mit einer beliebigen Stelle in der Stereolithographie-Vorrichtung, insbesondere an der Flasche angebracht und speichert zudem Informationen hinsichtlich des in der Flasche befindlichen Druckmaterials ab. Hierzu gehört die Art des Materials selbst und der aktuelle Füllstand.

Der Minispeicher ist so aufgebaut, dass ein Teil des Speichers, nämlich insbesondere der, der die Art des Druckmaterials betrifft, nicht änderbar ist, während ein weiterer Teil, insbesondere der, der den Füllstand betrifft, änderbar ist.

Die Erfindung ist nicht auf die Verwendung von Flaschen im eigentlichen Sinne beschränkt; anstelledessen können auch beliebige andere geeignete Behältnisse, die geschlossen oder nahezu geschlossen sind, erfindungsgemäß eingesetzt werden.

Bevorzugt wird die Erfindung in Verbindung mit der Stereolithographie-Vorrichtung gemäß der europäischen Patentanmeldung EP 18 162 320.8 eingesetzt.

Erfindungsgemäß ist besonders günstig, dass der Füllstandssensor exakt feststellt, wenn eine vorgegebene Restmenge in der Flasche vorliegt. Zwar ist auch ein Füllstandssensor in dem Sinne realisierbar, dass der genaue Füllstand angezeigt und abgespeichert wird. Erfindungsgemäß bevorzugt ist jedoch ein Schaltsensor, also ein solcher Sensor, der oberhalb eines bestimmten Füllstands ein erstes Signal und unterhalb eines bestimmten Füllstands ein zweites Signal abgibt. Hierbei weist das erste Signal daraufhin, dass die Flasche noch ausreichend mit Druckmaterial gefüllt ist, und das zweite Signal, dass der Füllstand nicht mehr ausreichend ist, so dass die Flasche ersetzt werden sollte.

Erfindungsgemäß ist es vorgesehen, dass der Minispeicher, der der Flasche zugeordnet ist, von der Stereolithographie-Vorrichtung auslesbar und auswertbar ist. Dies bedeutet, dass die Stereolithographie-Vorrichtung den in dem Minispeicher abgespeicherten Füllstand und/oder die sonstigen Informationen hinsichtlich des in der Flasche befindlichen Druckmaterials erfassen kann.

Dementsprechend weist die Stereolithographie-Vorrichtung eine Auslesevorrichtung für den Minispeicher auf, die bevorzugt mit einer Schreibvorrichtung für Informationen verbunden sein kann, wobei die Schreibvorrichtung beispielsweise Informationen über den Füllstand der Flasche in den Minispeicher einträgt.

Erfindungsgemäß günstig ist es, dass mit dem Füllstandsanzeiger zugleich exakt der Füllstand der Flasche wiedergegeben wird, und damit die Stereolithographie-Vorrichtung mit ihrer Steuervorrichtung selbstständig entscheiden kann, ob der Füllstand, also das in der Flasche vorhandene Druckmaterial, ausreicht, den anstehenden Baujob auszuführen.

Erfindungsgemäß besonders vorteilhaft ist die Doppelfunktion des Minispeichers, der nicht nur den Füllstand abspeichert, sondern auch gleich das betreffende Druckmaterial und bei Bedarf weitere Einzelheiten über das in der Flasche befindliche Druckmaterial wie beispielsweise das Herstelldatum, die Verfallszeit usw. Damit kann die Stereolithographie-Vorrichtung über ihre Steuervorrichtung entscheiden, ob das betreffende Druckmaterial für den anstehenden Baujob geeignet ist oder nicht.

Erfindungsgemäß besonders günstig ist es, dass die betreffenden Informationen beim Wechsel der Flasche erhalten bleiben können. Bei Annäherung der Flasche in die Aufnahme in der Stereolithographie-Vorrichtung entsteht eine Datenverbindung zwischen dem Minispeicher an der Flasche und der entsprechenden Sende-/ Empfangsvorrichtung für den Minispeicher in der Stereolithographie-Vorrichtung. Es erfolgt ein neues Auslesen des Minispeichers, so dass die Stereolithographie-Vorrichtung darüber informiert ist, welches Druckmaterial und wie viel Druckmaterial zur Verfügung steht, und beispielsweise, ob das Verfallsdatum noch nicht überschritten ist.

In modifizierter Ausgestaltung ist ein entsprechender Speicher, der auch als Minispeicher bezeichnet werden kann, in der Stereolithographie-Vorrichtung selbst vorhanden. Über einen eindeutigen Code auf der Flasche, beispielsweise einen QR-Code, erfolgt eine Identifikation der Flasche, so dass der zugehörige Speicherbereich in dem Minispeicher, der der betreffenden Flasche entspricht, ausgelesen werden kann, wenn die Flasche eingesetzt wird.

Bevorzugt ist jedoch die Realisierung des Minispeichers an der Flasche, insbesondere eines RFID-Tags, der für die NFC-Kommunikation geeignet ist und damit die Informationen über das Druckmaterial an der Flasche selbst umfasst.

Die Anbringung des RFID-Tag kann an einer beliebigen geeigneten Stelle erfolgen, die für das Senden und den Empfang per NFC geeignet ist. Die Sende-/Empfangsvorrichtung der Flasche umfasst bevorzugt eine entsprechend geeignete Antenne, über welche die bidirektionale Kombination mit dem RFID-Tag möglich ist.

In vorteilhafter Ausgestaltung ist die Flasche schwenkbar aufgenommen. In dem aufrechten Zustand der Flasche ist diese betriebsfähig und bereit für die Abgabe von Druckmaterial. In diesem Zustand ist auch die Kommunikation zwischen RFID-Antenne und RFID-Tag möglich, und während aus der Flasche Druckmaterial in die Wanne angegeben wird, wird der Füllstand der Flasche überwacht.

Der Füllstandsensor ist ebenfalls an einer beliebigen geeigneten Weise angebracht. Bevorzugt ist er als kapazitiver Sensor ausgebildet, der an einem unteren Ende der Flasche erfasst, ob ihm benachbart Druckmaterial vorliegt oder nicht, also Luft.

Erfindungsgemäß ist die Steuervorrichtung der Stereolithographie-Vorrichtung, die ohnehin für die Kommunikation mit einem RFID-Tag ausgelegt ist, mit einer weiteren RFID-Antenne verbunden. In einer günstigen Ausführung ist diese erfasst die Z-Achse der Bauplattform, also die Vertikalbewegung, und hierzu ist an der Bauplattform ist ein weiterer RFID-Tag angebracht. Damit lässt sich feststellen, wenn die Bauplattform in der Startposition ist, was für die Steuerung deren Vortrieb günstig ist.

In weiterer vorteilhafer Ausgestaltung wird zusätzlich zu der Erfassung des Füllstands über den Füllstandssensor der Verbrauch des Druckmaterials während des Slicens berechnet. Dies ermöglichst immerhin eine grobe Abschätzung, wann das Druckmaterial zur Neige gehen könnte.

Es ist möglich, denn RFID-Tag an der Flasche lediglich dann in die Steuerung einzubeziehen, wenn nach der Berechnung ein gewisser Schwellwert des Verbrauchs erreicht ist, also wenn nach der theoretischen Ermittlung beispielsweise die Hälfte des Druckmaterials in der Flasche verbraucht sein müsste.

Die Erfassung an der Flasche kann bevorzugt zyklisch erfolgen. Beispielsweise kann die Steuervorrichtung mehrmals pro Sekunde erfassen, ob sich der Zustand geändert hat. Dies gilt auch für die Erfassung der Position der Kassette, also, ob die Flasche in dem aufrechten oder im dem liegenden Zustand ist. Auch der Füllstandssensor wird bevorzugt in kurzen Abständen abgefragt.

Die erfindungsgemäße Lösung ermöglicht auch die Realisierung einer Sicherheitsvorrichtung. Diese sperrt beispielsweise die Abgabe von Druckmaterial, wenn die Sensoren anzeigen, dass ein Fehler in der Positionierung der Flasche vorliegt, so dass keine flüssigkeitsdichte Aufnahme gegeben ist. In diesem Fall wird bevorzugt ein Alarmsignal abgegeben.

Insbesondere wird über die Sicherheitsfunktion gewährleistet, dass der Bauprozess erst gestartet wird, wenn mindestens die Flasche als auch die Wanne und optional die Bauplattform an der richtigen Position und funktionsfähig sind, so dass eine Freigabe erfolgen kann.

In vorteilhafter Ausgestaltung wird zusätzlich zu der Signalisierung der Informationen an der Flasche in dem Minispeicher an die Steuervorrichtung über eine Anzeigevorrichtung angezeigt, welches Material in der Flasche vorliegt.

In weiterer vorteilhafter Ausgestaltung ist es vorgesehen, die betreffende Flasche beziehungsweise deren Druckmaterial dem Baujob in der Steuervorrichtung zuzuordnen und diese dort abzuspeichern. Diese Lösung ermöglicht es, bei fehlerhaft vorgenommenen Baujobs das verwendete Material zurückzuverfolgen. Damit ist es gegebenenfalls möglich, den Materialhersteller in Haftung zu nehmen.

Wenn eine Anzeigevorrichtung und eine entsprechende Eingabevorrichtung für die Benutzerkommunikation an der erfindungsgemäßen Stereolithographie-Vorrichtung vorhanden ist, ist es auch möglich, dem Benutzer Hinweise zu geben, wenn für einen bestimmten Baujob eine andere Flasche mit einem entsprechend anderem oder neuen Druckmaterial eingesetzt werden soll.

Der RFID-Tag kann auch mit einer RFID-Antenne mit einer kurzen Reichweite kombiniert werden. Wenn die Flasche dann fehlerhaft eingesetzt ist, ist keine Kommunikation möglich, und der Baujob wird gesperrt. Dies dient zusätzlich der Sicherheit der Bedienung der Stereolithographie-Vorrichtung.

Erfindungsgemäß ist es besonders günstig, wenn eine Spezialflasche für das Druckmaterial eingesetzt wird. Diese hat im Wesentlichen einen quaderförmigen Grundaufbau, mit einem leicht konischen Flaschenauslass. Der Bereich des Flaschenverschlusses, der für einen Schraubdeckel geeignet ausgebildet ist und dementsprechend ein Außengewinde hat, ist seitlich über Rippen verstärkt, die an dem Konus vorspringen.

Mit diesen Rippen lässt sich ein sicherer Anschluss an der Flaschenaufnahme, der zudem flüssigkeitsdicht ist, gewährleisten, indem die Flasche in die Flaschenaufnahme eingedrückt wird.

An dieser Stelle lässt sich auch erfindungsgemäß der Näherungssensor als kapazitiver Näherungssensor platzieren. Die Anordnung ist beispielsweise so, dass der Näherungssensor oder Füllstandssensor auf ein Flüssigkeitspegel anspricht, der etwa 2cm oberhalb des Flaschenauslasses vorliegt.

Des Weiteren versteht sich, dass der kapazitive Näherungssensor auf das verwendete Druckermaterial bzw. die Druckmaterialien einzustellen ist.

Demgegenüber kann der RFID-Tag oder Minispeicher an einer beliebigen geeigneten Stelle der Flasche angeordnet sein, beispielsweise auf einer Wandseitenfläche.

Für die Wirksamkeit des Füllstandssensors ist eine vergleichsweise geringe Wandstärke wichtig. Diese Anforderung widerspricht eigentlich der für den flüssigkeitsdichten Ansatz der Flasche erforderlichen Stabilität der Flasche; durch die Verstärkungsrippen seitlich des Flaschenauslasses lassen sich jedoch die beiden einander entgegenstehenden Anforderungen vereinbaren.

In bevorzugter Ausgestaltung ist abgesehen von dem Verfallsdatum auch die Letztverwendung der Flasche in dem RFID-Tag abgespeichert. Wenn die Letztverwendung länger her ist als eine bestimmte Frist, beispielsweise zwei Wochen, kann der Benutzer über die Anzeige der Stereolithographie-Vorrichtung aufgefordert werden, die Flasche zu schütteln, um eine gleichmäßige Verteilung von Sedimenten und/oder Partikeln in dem Druckmaterial zu gewährleisten.

Erfindungsgemäss vorteilhaft kann die Stereolithographie-Vorrichtung dergestalt angesteuert werden, dass über eine Relativbewegung zwischen Wanne und der in diese eingetauchten Bauplattform eine Mischbewegung durchgeführt wird, um ein länger gelagertes Material durchzumischen. Die Mischzeit kann als Vorgabe anhand entsprechend diversen Lagerzeiten vorgegeben werden, wobei diese Information automatisch vom System vorgegeben wird bzw. anhand der Lagerzeit des Materials berechnet werden kann.

Um die Mischung des Materials durchführen zu können, ist mindestens eine in z-Richtung verfahrbare Bauplattform und eine in x- und y-Richtung verfahrbare Wanne bzw. Kassette notwendig, oder eine in z-Richtung und/oder x- und y-Richtung verfahrbare Bauplattform und eine in x- oder y-Richtung verfahrbare in Wanne bzw. Kassette notwendig.

Weitere Ausgestaltungen in Verbindung mit einer kippbaren Bauplattform 66 und/ oder kippbaren Wanne 42 bzw. Kassette 40 bzw. weitere Kombination hiervon sind denkbar.

Bei schwenkbarer Lagerung der Flasche kann es günstig sein, den RFID-Tag im Bereich des Füllstandssensors, also am unteren auslassseitigen Ende der Flaschen anzubringen. Grund hierfür kann sein, dass die Reichweite von RFID-Antennen begrenzt ist, und bei einer derartigen Anordnung ist der beim Schwenken der Flasche zurückgelegte Weg des RFID-Tags geringer, so dass er noch in der Reichweite der RFID-Antenne liegen kann.

Bevorzugt ist der RFID-Tag so angebracht, dass ein geringer Abstand zum Sensor realisierbar ist. Als günstig hat sich hier ein Wert von etwa 5mm herausgestellt, der die Exemplarstreuungen und das Lagerspiel der Flasche in der Flaschenaufnahme berücksichtigt, aber eine sichere Auswertung und Kommunikation ermöglicht.

Weitere Vorteile, Einzelheiten und Merkmale ergeben sich aus der nachfolgenden Beschreibung mehrerer Ausführungsformen der Erfindung anhand der Zeichnung.

Es zeigen:
- Fig. 1: eine schematische Ansicht einer erfindungsgemäßen Flasche zur Verwendung in einer erfindungsgemäßen Stereolithographie-Vorrichtung;
- Fig. 2: die Lagerung der Flasche in der Flaschenaufnahme und der zugehörigen Kassette der Stereolithographie-Vorrichtung;
- Fig. 3: eine schematische perspektivische Ansicht einer erfindungsgemäßen Stereolithographie-Vorrichtung; und
- Fig. 4: eine weitere Ausführungsform einer erfindunsgemäßen Stereolithographie-Vorrichtung.

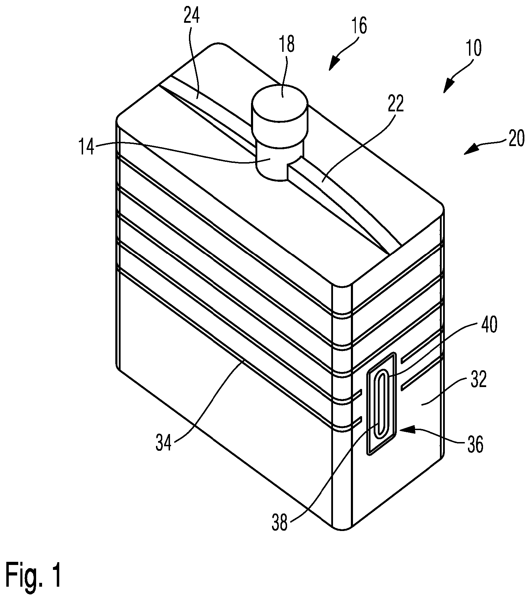

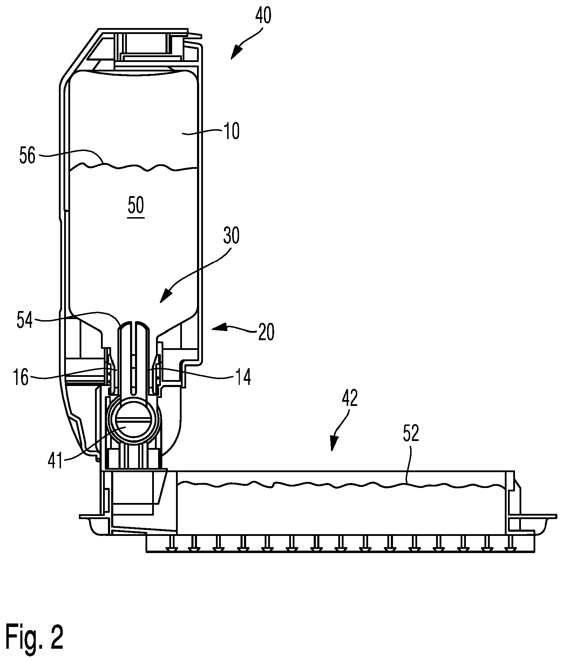

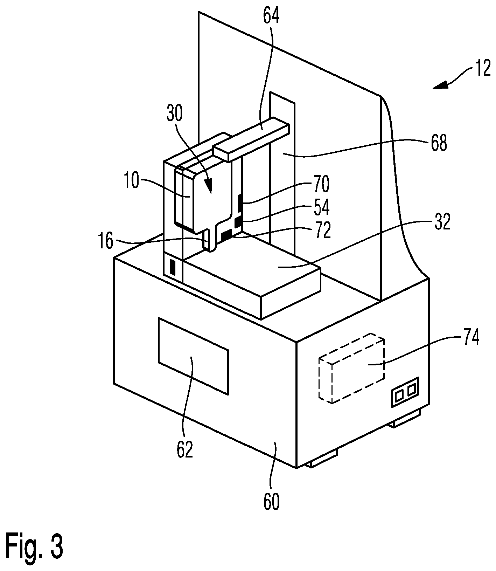

Die in Fig. 1 dargestellte Flasche 10 ist für die Aufnahme in der beispielsweise in Fig. 3 dargestellten Stereolithographie-Vorrichtung 12 vorgesehen. Sie ist in Fig. 1 im Befüllzustand dargestellt, wird in der Praxis jedoch kopfüber eingesetzt, wie es beispielsweise aus Fig. 2 und 3 ersichtlich ist. Die Flasche 10 ist im wesentlichen quaderförmig. Sie weist in an sich bekannter Weise einen Flaschenhals 14 und einen Auslass 16 mit einem Schraubgewinde auf, der im Beispielsfalle von einem an sich bekannten Deckel 18 verschlossen ist.

Die Flasche 10 besteht aus einem vergleichsweise dünnwandigen Material. Ihr unterer Abschnitt 20 - der in Fig.1 oben dargestellt ist - ist bis zum Flaschenhals 18 hin verjüngt. Dieser Abschnitt kann konisch ausgebildet sein, wie es aus Fig. 2 ersichtlich ist, oder im Wesentlichen eben, wie es auch den Fig. 1 und 3 ersichtlich ist. Bevorzugt weist er jedenfalls Verstärkungsrippen 22 und 24 auf, die dazu dienen, die beim Einsetzen der Flasche 10 in die Flaschenaufnahme 30 (vergleiche Fig. 2, 3) ausgeübte Kraft aufzunehmen und zu den Wänden 32 der Flasche 10 abzuleiten.

Die Flasche 10 weist in der dargestellten Ausführungsform gemäß Fig. 1 zusätzlich Aussteifungsrippen 34 auf, die jedoch bei der Ausgestaltung gemäß Fig. 2 und 3 nicht vorgesehen sind.

An einer der Wände 32 ist erfindungsgemäß ein RFID-Tag 36 angeordnet. Ein RFID-Tag 36 besteht aus einem kleinen Speicher, dem Minispeicher 38, und einer Mini Antenne 40, die der Kommunikation mit der Außenwelt dient, sowie einer Steuerelektronik, die hier nicht dargestellt ist. RFID-Tags an sich sind bekannt.

Der RFID-Tag 36 ist an einer schmalen Seitenwand der Flasche 10 angebracht.

Diese Anordnung ist bevorzugt, nachdem die schmale Seitenwand typischerweise etwas weniger nachgiebig als die breite Seitenwand ist. Er ist auch der Seitenecke und der Seitenwand recht nahe benachbart; auch dort ist eine rechteckige Flasche typischerweise vergleichsweise formsteif.

Im dargestellten Ausführungsbeispiel ist der RFID-Tag 36 etwa auf mittlerer Höhe der Flasche 10 angebracht. Je nach Ausführungsform kann es auch günstig sein, ihn etwas weiter unten - in der Darstellung gemäß Fig. 1 also oben - anzuordnen, mit den vorstehend genannten Vorteilen.

In jedem Fall ist es vorgesehen, eine hier nicht dargestellte Antenne für den RFID-Tag 36 in unmittelbarer Nähe zu diesem in oder an der Flaschenaufnahme 30 vorzusehen.

Bei der Ausführungsform gemäß Fig. 1 der RFID-Tag 36 hochkant angebracht ist, versteht es sich, dass er bei Bedarf nach Belieben auch horizontal angebracht werden kann.

Die Anbringung erfolgt in an sich bekannter Weise durch Kleben auf der Flaschenaußenseite, so dass der ergebene RFID-Tag 36 unverlierbar mit der Flasche 10 verbunden ist.

Aus Fig. 2 ist eine mögliche Anordnung der Flasche 10 in einer Kassette 40 mit der Flaschenaufnahme 30 ersichtlich. Die Flasche 10 ist bei dieser Ausgestaltung mit einem konusförmigen Abschnitt 20 versehen, der sich zwischen den Seitenwänden 32 und dem Flaschenhals 14 erstreckt. Der Auslass 16 ist in die Aufnahme 30 der Flasche 10 eingesteckt. Diese weist auch ein Drehventil 40 auf. Das Drehventil 40 ist geöffnet, wenn sich die Flasche 10 in Position gemäß Fig. 2 befindet. Es ist geschlossen, wenn die Flasche 10 demgegenüber um 90° nach rechts geschwenkt ist und dementsprechend oberhalb einer Wanne 42 zu liegen kommt. Die nach unten geschwenkte Position der Kassette 40 entspricht der Transportposition. In dem nach oben geschwenkten Zustand kann Druckmaterial 50 aus der Flasche 10 durch den Auslass 16 und das Drehventil 40 in die Wanne 42 einströmen.

Es sind beliebige an sich bekannte Maßnahmen getroffen, um einen Flüssigkeitspegel 52 in der Wanne 42 aufrechtzuerhalten. Beispielsweise ist ein sogenanntes Kuhtränken-Ventil hierfür geeignet, das die Flüssigkeit in der Wanne 42 hereinragt.

In der Darstellung gemäß Fig. 2 hinter der Flasche 10 ist der Füllstandssensor 54 angeordnet. Er wirkt kapazitiv und misst, ob an der Stelle der Flasche 10, die ihm benachbart ist, Flüssigkeit vorhanden ist oder nicht. Er ist an der Flaschenaufnahme 30 angebracht, und zwar knapp oberhalb des Abschnitts 20 oder an dem Abschnitt 20.

Das bedeutet, dass er auslöst, wenn der Pegel 56 des Druckmaterials 50 in der Flasche 10 unterhalb dieser Stelle sinkt. In diesem Fall steht noch etwas Druckmaterial 50 in der Flasche 10 zur Verfügung. Dieses ist so kalkuliert, dass es jedenfalls ausreicht, per Stereolithographie aus dem Druckmaterial 50 in der Wanne 42 noch mindestens drei Bauteile herzustellen, also zu Slicen, die vom Volumen her beispielsweise einer Oberkieferprothese entsprechen.

Auf dieser Art ist sichergestellt, dass der Pegel 56 in der Wanne 42 stets ausreichend für eine qualitativ hochwertige Stereolithographie ist.

Aus Fig. 3 sind beispielhafte Anordnungen der Stereolithographie-Vorrichtung 12 ersichtlich. Die Stereolithographie-Vorrichtung 12 umfasst ein Gehäuse 60 mit einer kombinierten Anzeigevorrichtung und Bedienvorrichtung 62. Die Kassette 40 ist auf das Gehäuse 60 aufgesetzt und entspricht der Darstellung gemäß Fig. 2, wobei Fig. 3 allerdings deutlich schematisierter ist.

Die Flasche 10 ist in der Aufnahme 30 aufgenommen, mit dem Auslass 16 nach unten, so dass Druckmaterial 50 an die Wanne 42 abgegeben werden kann.

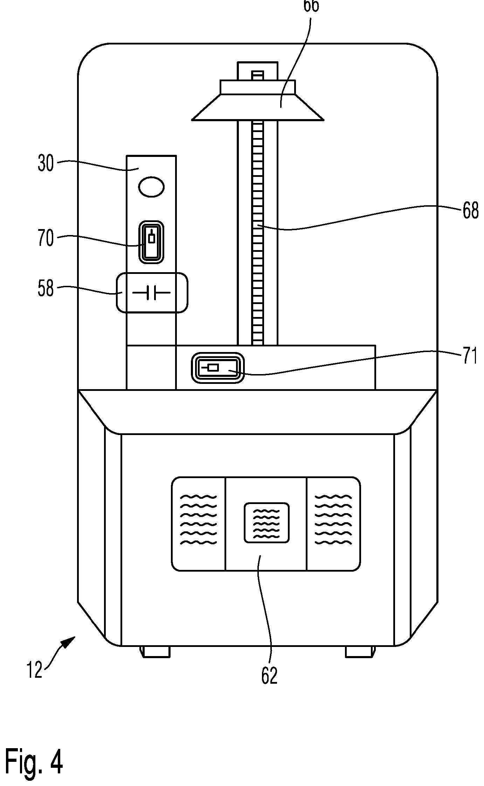

Oberhalb der Wanne 42 erstreckt sich ein Haltearm 64 für die aus Fig. 3 nicht ersichtliche Bauplattform 66 (Fig. 4). Diese ist über einen Antrieb 68 vertikal, also in Richtung der Z-Achse verfahrbar.

Der Flasche 10 benachbart sind Antennen 70 und 72 für die Erfassung des RFID-Tags 36 vorgesehen. Diese sind an der Aufnahme 30 der Flasche 10 angebracht. Zusätzlich ist der Füllstandssensor 54 dem Auslass 16 der Flasche 10 benachbart angeordnet.

Im Betrieb wird nun über eine gestrichelt dargestellte Steuervorrichtung 74 der Zustand des Minispeichers 38 an den RFID-Tag 36 der Flasche 10 ausgelesen. Damit liegen der Steuervorrichtung 74 verschiedene Informationen über das Druckmaterial 50 in der Flasche 10 vor.

Ferner wird über den Füllstandssensor 54 der Füllstand des Druckmaterials 50 in der Flasche 10 erfasst.

Wenn alle Werte in Ordnung sind und zu dem anvisierten Baujob passen, wird dies auf der Anzeigevorrichtung angezeigt und nach Benutzerbestätigung wird der zugehörige Baujob gestartet.

Permanent wird während des Baujobs der Füllstandssensor 54 abgefragt. Wenn während des Baujobs der Füllstand des Druckmaterials 50 in der Flasche 10 unter einem vorgegebenen Wert fällt, wird dennoch der Baujob fertiggestellt, da noch eine Reserve von Druckmaterial 50 in der Flasche 10 ist.

Jedoch wird der nächstfolgende Baujob nicht freigegeben; viel mehr wird der Benutzer zum Flaschenwechsel aufgefordert.

Die Steuervorrichtung 74 merkt den Flaschenwechsel und überprüft, ob das Druckmaterial 50 in der Flasche 10 zu dem in der Wanne 42 befindlichen Druckmaterial 50 passt, andernfalls wird die Entnahme gesperrt.

Damit wird auch eine Kreuzkontamination ggf. verhindert. Wenn die Kreuzkontamination nicht vollständig verhindert werden kann, da bereits Material in die Wanne geflossen ist, wird jedoch die Kreuzkontamination sofort erkannt und signalisiert.

Erst wenn das richtige Druckmaterial 50, also die richtige Flasche 10, in die Aufnahme 30 eingesetzt ist, wird der nächste Baujob freigegeben.

Aus Fig. 4 ist eine andere Ausgestaltung der erfindungsgemäßen Stereolithographie-Vorrichtung 12 ersichtlich. Hier wie auch in den weiteren Fig. entsprechen gleiche Bezugszeichen gleichen oder entsprechenden Teilen. Bei dieser Ausgestaltung ist die Aufnahme 30 der Flasche 10 mit der Antenne 70 für den RFID-Tag 36 und zusätzlich dem Füllstandssensor 58 versehen. Es ist eine weitere Antenne 72 vorgesehen, die für die Kommunikation mit dem RFID-Tag 36 an der Flasche 10 bestimmt ist, wenn die Flasche 10 sich in der legenden Anordnung findet.

## Patentansprüche

1. Stereolithographie-Vorrichtung, mit einer austauschbaren Flasche für die Aufnahme von Druckmaterial, die in oder an einem Flaschenlager lagerbar ist und aus der Druckmaterial über eine vorrichtungsseitige Flaschenaufnahme in die Stereolithographie-Vorrichtung entnehmbar ist, wobei ein Füllstandssensor (58) an der Stereolithographie-Vorrichtung angebracht ist, mit dem ein Füllstand des Druckmaterials (50) in der Flasche (10) erfassbar ist, **dadurch gekennzeichnet, dass** der Flasche (10) ein Minispeicher (38) zugeordnet ist, in dem die Stereolithographie-Vorrichtung (12) Informationen hinsichtlich des Füllstandes des in der Flasche (10) befindlichen Druckmaterials (50) abspeichert, wobei der Mini-Speicher (38) in oder an einem RFID-Tag (36) ausgebildet ist, der an der Flasche angebracht ist und die Stereolithographie-Vorrichtung (12) eine RFID-Antenne aufweist, die für die bidirektionale Kommunikation mit dem RFID-Tag (36) an der Flasche (10) ausgebildet ist und an die Steuervorrichtung (74) der Stereolithographie-Vorrichtung (12) angeschlossen ist.

2. Stereolithographie-Vorrichtung nach Anspruch 1, **dadurch gekennzeichnet, dass** die Stereolithographie-Vorrichtung (12) eine Steuervorrichtung (74) aufweist, die basierend auf den geslicten Flächen den Druckmaterial-Verbrauch berechnet.

3. Stereolithographie-Vorrichtung nach einem der vorherigen Ansprüche, **dadurch gekennzeichnet, dass** die Flasche (10) an ihrer Flaschenaufnahme oder zusammen mit dieser schwenkbar in der Stereolithographie-Vorrichtung (12) gelagert ist und die bidirektionale Kommunikation zwischen RFID-Antenne und RFID-Tag (36) in dem aufrechten Schwenkzustand der Flasche (10) arbeitet.

4. Stereolithographie-Vorrichtung nach einem der vorherigen Ansprüche, **dadurch gekennzeichnet, dass** die Flasche (10) verdrehsicher in dem Flaschenlager gelagert ist.

5. Stereolithographie-Vorrichtung nach einem der vorherigen Ansprüche, **dadurch gekennzeichnet, dass** eine Ausgusstülle der Flasche (10) zum Flaschenhals (14) hin und von diesem vorspringend Verstärkungsrippen aufweist, oberhalb derer - betrachtet in der Position mit der Ausgusstülle unten - der Füllstandssensor (54) angebracht ist.

6. Stereolithographie-Vorrichtung nach einem der vorherigen Ansprüche, **dadurch gekennzeichnet, dass** die vorrichtungsseitige Aufnahme des Flaschenlagers eine Strömungsverbindung mit einer mit Druckmaterial (50) befüllbaren Wanne (42) hat, in die eine Bauplattform der Stereolithographie-Vorrichtung (12) einführbar ist.

7. Stereolithographie-Vorrichtung nach Anspruch 6, **dadurch gekennzeichnet, dass** die Strömungsverbindung in die Wanne (42) über einen Viehtränken-Auslass realisiert ist, über welchen bei sinkendem Wannenfüllstand Druckmaterial (50) aus der Flasche (10) automatisch nachführbar ist.

8. Stereolithographie-Vorrichtung nach einem der vorherigen Ansprüche, **dadurch gekennzeichnet, dass** der Füllstandssensor (54) auslöst, wenn die Flasche (10) ein Restvolumen von Druckmaterial (50) von weniger als 10 Kubikzentimeter aufweist.

9. Stereolithographie-Vorrichtung nach einem der vorherigen Ansprüche, **dadurch gekennzeichnet, dass** eine Steuervorrichtung der Stereolithographie-Vorrichtung (12) den Beginn eines Druckvorgangs sperrt, wenn der Füllstandssensor (54) anzeigt, dass nicht ausreichend Druckmaterial (50) in der Flasche (10) und/ oder der Wanne (42) vorhanden ist.

10. Stereolithographie-Vorrichtung nach einem der vorherigen Ansprüche, **dadurch gekennzeichnet, dass** der Füllstandsensor (54) als kapazitiver Sensor ausgebildet ist, der in Nachbarschaft des unteren Endes der Flasche (10) 1 bis 20 mm von der Flasche (10) entfernt, in oder an der Stereolithographie-Vorrichtung (12) angebracht ist.

11. Stereolithographie-Vorrichtung nach einem der vorherigen Ansprüche, **dadurch gekennzeichnet, dass** die Steuervorrichtung basierend auf der Kommunikation zwischen RFID-Antenne und RFID-Tag (36) die Art der Flasche (10), die Art des in der Flasche (10) befindlichen Druckmaterials (50), die Größe der Flasche (10), das Herstelldatum des Druckmaterials (50) in der Flasche (10), den Beginn des Verbrauchs des Druckmaterials (50) aus der Flasche (10), die Art des Druckmaterials (50) und/oder die Letztverwendung der Flasche (10) abspeichert.

12. Stereolithographie-Vorrichtung nach einem der vorherigen Ansprüche, **dadurch gekennzeichnet, dass** zusätzlich zu dem RFID-Tag (36) auf oder an der Flasche (10) ein QR-Code oder ein Strich-Code angebracht ist, der relevante Eigenschaften des in der Flasche (10) vorhandenen Druckmaterials (50) abspeichert.

## Claims

1. A stereolithography device, having an exchangeable bottle for receiving printing material, which bottle is storable in or on a bottle holder and from which bottle printing material is extractable via a bottle receiving means on the device side into the stereolithography device, wherein a filling level sensor (58) is disposed on the stereolithography device by which a filling level of the printing material (50) in the bottle (10) can be detected, **characterized in that** a mini memory device (38) is assigned to the bottle (10) in which the stereolithography device (12) stores information regarding the filling level of the printing material (50) located in the bottle (10), wherein the mini memory device (38) is configured in or on an RFID tag (36) attached to the bottle and the stereolithography device (12) comprises an RFID antenna configured for the bidirectional communication with the RFID tag (36) on the bottle (10) and connected to the control device (74) of the stereolithography device (12).

2. The stereolithography device according to claim 1, **characterized in that** the stereolithography device (12) has a control device (74) which calculates the consumption of printing material based on the sliced surfaces.

3. The stereolithography device according to one of the preceding claims, **characterized in that** the bottle (10) is mounted on its bottle receiving means or, together therewith, is pivotally mounted in the stereolithography device (12), and the bidirectional communication between the RFID antenna and the RFID tag (36) operates in the upright pivotal state of the bottle (10).

4. The stereolithography device according to one of the preceding claims, **characterized in that** the bottle (10) is mounted in the bottle holder so as to be non-rotatable.

5. The stereolithography device according to one of the preceding claims, **characterized in that** a pouring spout of the bottle (10) has reinforcing ribs projecting to and from the bottleneck (14), above which the filling level sensor (54) is disposed, as viewed in the position with the pouring spout facing downwards.

6. The stereolithography device according to one of the preceding claims, **characterized in that** the device-sided receiving means of the bottle holder is in flow connection with a trough (42) which can be filled with printing material (50) and into which a build platform of the stereolithography device (12) can be introduced.

7. The stereolithography device according to claim 6, **characterized in that** the flow connection into the trough (42) is realized via a livestock watering trough outlet, from which printing material (50) from the bottle (10) can automatically be supplied when the trough filling level falls.

8. The stereolithography device according to one of the preceding claims, **characterized in that** the filling level sensor (54) is triggered when the bottle (10) has a residual volume of printing material (50) of less than 10 cubic centimeters.

9. The stereolithography device according to one of the preceding claims, **characterized in that** a control device of the stereolithography device (12) blocks the start of a printing operation when the filling level sensor (54) indicates that there is insufficient printing material (50) in the bottle (10) and/or the trough (42).

10. The stereolithography device according to one of the preceding claims, **characterized in that** the filling level sensor (54) is configured as a capacitive sensor disposed in or on the stereolithography device (12) adjacent to the lower end of the bottle (10) 1 to 20 mm away from the bottle (10).

11. The stereolithography device according to one of the preceding claims, **characterized in that** the control device stores the type of bottle (10), the type of printing material (50) located in the bottle (10), the size of the bottle (10), the date of manufacture of the printing material (50) in the bottle (10), the start of consumption of the printing material (50) from the bottle (10), the type of printing material (50) and/or the final use of the bottle (10) based on the communication between the RFID antenna and the RFID tag (36).

12. The stereolithography device according to one of the preceding claims, **characterized in that**, in addition to the RFID tag (36), a QR code or a barcode which stores relevant properties of the printing material (50) present in the bottle (10) is attached to or on the bottle (10).

## Revendications

1. Dispositif de stéréolithographie comprenant une bouteille interchangeable pour la réception de matériau d'impression, qui peut être logée dans ou sur un support de bouteille et à partir de laquelle le matériau d'impression peut être prélevé dans le dispositif de stéréolithographie par l'intermédiaire d'un logement de bouteille côté dispositif, où un capteur de niveau de remplissage (58) est monté sur le dispositif de stéréolithographie avec lequel un niveau remplissage du matériau d'impression (50) dans la bouteille (10) peut être détecté, **caractérisé en ce qu'**une mini-mémoire (38) est associée à la bouteille (10), dans laquelle le dispositif de stéréolithographie (12) stocke des informations concernant le niveau du matériau d'impression (50) contenu dans la bouteille (10), où la mini-mémoire (38) est formée dans ou sur une étiquette RFID (36) qui est fixée à la bouteille et le dispositif de stéréolithographie (12) présente une antenne RFID qui est conçue pour la communication bidirectionnelle avec l'étiquette RFID (36) sur la bouteille (10) et qui est connectée au dispositif de commande (74) du dispositif de stéréolithographie (12).

2. Dispositif de stéréolithographie selon la revendication 1, **caractérisé en ce que** le dispositif de stéréolithographie (12) comporte un dispositif de commande (74) qui calcule la consommation de matériau d'impression sur la base des surfaces tranchées.

3. Dispositif de stéréolithographie selon l'une des revendications précédentes, **caractérisé en ce que** la bouteille (10) est montée sur son support de bouteille ou avec celui-ci de manière à pouvoir pivoter dans le dispositif de stéréolithographie (12) et **en ce que** la communication bidirectionnelle entre l'antenne RFID et l'étiquette RFID (36) fonctionne dans l'état de pivotement vertical de la bouteille (10).

4. Dispositif de stéréolithographie selon l'une des revendications précédentes, **caractérisé en ce que** la bouteille (10) est logée de manière à ne pas pouvoir tourner dans le support de bouteille.

5. Dispositif de stéréolithographie selon l'une des revendications précédentes, **caractérisé en ce qu'**un bec verseur de la bouteille (10) présente en direction du goulot (14) et en saillie par rapport à celui-ci, des nervures de renforcement au-dessus desquelles - vu dans la position avec le bec verseur en bas - le capteur de niveau de remplissage (54) est monté.

6. Dispositif de stéréolithographie selon l'une des revendications précédentes, **caractérisé en ce que** le logement du support de bouteille côté dispositif présente une liaison d'écoulement avec une cuve (42) qui peut être remplie d'un matériau d'impression (50), dans laquelle une plate-forme de construction du dispositif de stéréolithographie (12) est insérable.

7. Dispositif de stéréolithographie selon la revendication 6, **caractérisé en ce que** la connexion d'écoulement dans l'auge (42) est réalisée par l'intermédiaire d'une sortie d'auge pour bétail, par l'intermédiaire de laquelle, lorsque le niveau de remplissage de la cuve diminue, le matériau d'impression (50) peut être acheminé automatiquement depuis la bouteille (10).

8. Dispositif de stéréolithographie selon l'une quelconque des revendications précédentes, **caractérisé en ce que** le capteur de niveau (54) se déclenche lorsque la bouteille (10) présente un volume résiduel de matériau d'impression (50) inférieur à 10 centimètres cubes.

9. Dispositif de stéréolithographie selon l'une des revendications précédentes, **caractérisé en ce qu'**un dispositif de commande du dispositif de stéréolithographie (12) bloque le démarrage d'un processus d'impression lorsque le capteur de niveau (54) indique qu'il n'y a pas suffisamment de matériau d'impression (50) dans la bouteille (10) et/ou la cuve (42).

10. Dispositif de stéréolithographie selon l'une des revendications précédentes, **caractérisé en ce que** le capteur de niveau (54) est conçu comme un capteur capacitif qui est monté à proximité de l'extrémité inférieure de la bouteille (10) à une distance de 1 à 20 mm de la bouteille (10), dans ou sur le dispositif de stéréolithographie (12).

11. Dispositif de stéréolithographie selon l'une des revendications précédentes, **caractérisé en ce que** le dispositif de commande mémorise, sur la base de la communication entre l'antenne RFID et l'étiquette RFID (36), le type de bouteille (10), le type de matériau d'impression (50) présent dans la bouteille (50), la taille de la bouteille (10), la date de fabrication du matériau d'impression (50) dans la bouteille (10), le début de la consommation du matériau d'impression (50) provenant de la bouteille (10), le type de matériau d'impression (50) et/ou la dernière utilisation de la bouteille (10).

12. Dispositif de stéréolithographie selon l'une des revendications précédentes, **caractérisé en ce qu'**en plus de l'étiquette RFID (36), un code QR ou un code-barres est appliqué sur ou à la bouteille (10) lequel code QR ou code à barres met en mémoire les propriétés pertinentes du matériau d'impression (50) présent dans la bouteille (10) .
